# EUROPÄISCHE PATENTSCHRIFT

(11) **EP 4 093 688 B1**
(45) Veröffentlichungstag und Bekanntmachung des Hinweises auf die Patenterteilung: **11.03.2026**
(21) Anmeldenummer: 21701429.9
(22) Anmeldetag: 18.01.2021
(51) Int. Cl.: B65G 1/04

(54) **LAGEREINRICHTUNG, LAGERSYSTEM UND VERFAHREN ZUR HANDHABUNG PLATTENFÖRMIGER WERKSTÜCKE**
STORAGE DEVICE, STORAGE SYSTEM, AND METHOD FOR HANDLING PANEL-SHAPED WORKPIECES
DISPOSITIF DE STOCKAGE, SYSTÈME DE STOCKAGE ET PROCÉDÉ DE MANIPULATION DE PIÈCES EN FORME DE PANNEAU

(30) Priorität: 21.01.2020 DE 102020101307
(43) Veröffentlichungstag der Anmeldung: 30.11.2022
(73) Patentinhaber: HOMAG Automation GmbH, 09638 Lichtenberg (DE)
(72) Erfinder: ZILLER, Dominik, 09600 Oberschöna (DE)
(74) Vertreter: Hoffmann Eitle
(86) Internationale Anmeldenummer: PCT/EP2021/050914
(87) Internationale Veröffentlichungsnummer: WO 2021/148341

(56) Entgegenhaltungen:
- EP-A1- 1 588 962
- DE-A1- 19 525 515
- JP-A- S5 471 610
- JP-A- S54 140 368
- US-A1- 2014 021 253

## Beschreibung

### Technisches Gebiet

Die Offenbarung betrifft eine Lagereinrichtung und ein Lagersystem sowie deren Verwendung. Die Offenbarung betrifft ferner ein Verfahren zur Handhabung plattenförmiger Werkstücke.

### Stand der Technik

Beispielsweise ist aus WO 2019/020595 A1 bekannt, dass plattenförmige Halbzeuge vor dem Durchführen einer Bearbeitungsoperation in einer Lagereinrichtung bevorratet sein können. Eine derartige Lagereinrichtung kann beispielsweise dem Zweck der geordneten Aufbewahrung der Halbzeuge dienen.

Bei der in WO 2019/020595 A1 offenbarten Lagereinrichtung sind die darin bevorrateten Werkstücke im Wesentlichen parallel angeordnet, wobei jedem Werkstück eine Lagerposition zugeordnet ist. Dies kann insbesondere bei plattenförmigen Werkstücken Vorteile in Bezug auf eine effiziente Raumausnutzung bieten. Jedoch ist die Vielzahl der Lagerpositionen in WO 2019/020595 A1 auch mit einer Vielzahl verschiedener Entnahmepositionen verbunden. Wenn eine Entnahme und/oder Beschickung der Lagereinrichtung automatisiert erfolgt, müssen bei einem entsprechenden Handhabungsroboter folglich mehrere Entnahmepositionen hinterlegt sein. Damit geht wiederum ein vergleichsweise hoher Einrichtungsaufwand der Entnahme- und/oder Beschickungseinrichtung einher. Darüber hinaus müssen Werkstücke im Zuge einer Entnahme und/oder Beschickung über unterschiedliche Wegstrecken transportiert werden, woraus sich variierende Entnahmezeiten ergeben. Insbesondere kann es vorkommen, dass ein Takt einer nachfolgenden Bearbeitungseinrichtung auf eine bestimmte Entnahmetakt (z.B. die längst möglichen Entnahmezeit) abgestimmt sein muss. Hieraus resultieren wiederum eine vergleichsweise hohe Gesamtfertigungsdauer und entsprechend hohe Fertigungskosten. Neben den oben beschriebenen Lagersystemen sind auch dynamische Lagersysteme bekannt. Diese sind beispielsweise dazu eingerichtet, darin bevorratete Halbzeuge an eine bestimmte Entnahmeposition zu überführen. So offenbart beispielsweise DD 274602 A1 ein Beschickgerät für Holzwerkstoffplatten mit Speicherplätzen, wobei die Speicherplätze bewegbar sind.

Weitere Beispiele bisher bekannter Lagereinrichtungen können DE 195 25 515 A1, US 2014/021253 A1, welche die Grundlage für die zweiteilige Fassung des unabhängigen Vorrichtungsanspruchs 1 bildet, JP S54 71610 A, JP S54 140368 A entnommen werden.

Jedoch hat sich gezeigt, dass eine derartige Lagereinrichtung mit einer vergleichsweise ineffizienten Raumausnutzung und/oder einem vergleichsweise hohen Raumbedarf einhergeht. Dies wirkt sich wiederum negativ auf Fertigungskosten aus.

### Darstellung der Erfindung

Der vorliegenden Offenbarung liegt die Aufgabe zugrunde, zumindest eines der vorstehend beschriebenen Probleme zu lösen, und eine effiziente Möglichkeit zur Lagerung und/oder Handhabung plattenförmiger Werkstücke bereitzustellen.

Diese Aufgabe wird durch eine Lagereinrichtung gemäß Anspruch 1, ein Lagersystem gemäß Anspruch 14, eine Verwendung gemäß Anspruch 16 und/oder ein Verfahren gemäß Anspruch 17 gelöst. Unteransprüche beziehen sich auf bestimmte Ausführungsformen.

Die erfindungsgemäße Lagereinrichtung eignet sich zum Bevorraten von Werkstücken, insbesondere von plattenförmigen Werkstücken, die bevorzugt zumindest abschnittsweise aus Holz, Holzhaltigem Werkstoff, Verbundwerkstoff, Kunststoff, Aluminium oder dergleichen bestehen, und die jeweils eine Länge, eine Breite und eine Dicke aufweisen. Die Lagereinrichtung weist zumindest einen Bevorratungsbereich auf, der bezüglich einer Rotationsachse zumindest abschnittsweise drehbar ausgebildet ist. Der Bevorratungsbereich der Lagereinrichtung ist dazu eingerichtet, eine Mehrzahl an Werkstücken, insbesondere plattenförmigen Werkstücken, derart aufzunehmen, dass die Breitenrichtungen oder die Längsrichtungen der Werkstücke bezüglich der Rotationsachse im Wesentlichen radial orientiert sind, und dass die jeweils anderen der Breiten- oder Längsrichtungen der Werkstücke im Wesentlichen parallel zur Rotationsachse orientiert sind. Alternativ dazu oder zusätzlich kann der Bevorratungsbereich der Lagereinrichtung dazu eingerichtet sein, eine Mehrzahl an Werkstücken, insbesondere eine Mehrzahl an plattenförmigen Werkstücken, derart aufzunehmen, dass Dickenrichtungen der Werkstücke bezüglich der Rotationsachse im Wesentlichen in Umfangsrichtung orientiert sind.

Die erfindungsgemäße Lagereinrichtung weist ferner eine Mehrzahl an ersten Führungsmitteln auf. Die ersten Führungsmittel sind bezüglich der Rotationsachse derart in Umfangsrichtung angeordnet, dass zwischen jeweils zwei ersten Führungsmitteln ein Spalt gebildet ist, der sich zum bezüglich der Rotationsachse radialen Einschieben eines Werkstücks in den Bevorratungsbereich der Lagereinrichtung eignet.

Auf diese Weise kann es ermöglicht werden, Werkstücken auch in Umfangsrichtung (bezüglich der Rotationsachse) jeweils einer exakten Position zuzuordnen, wodurch ein vereinheitlichter Entnahmevorgang gefördert wird. Eine Spaltweite zwischen jeweils zwei ersten Führungsmitteln kann beispielsweise zumindest 5 mm und nicht mehr als 41 mm betragen. Bevorzugt beträgt eine Spaltweite zwischen jeweils zwei ersten Führungsmitteln zumindest 17 mm und nicht mehr als 21 mm. Durch eine räumliche Trennung einzelner Werkstücke der Lagereinrichtung durch die ersten Führungsmittel kann ferner das Risiko der (gegenseitigen) Beschädigung einzelner Werkstücke reduziert werden.

Die erfindungsgemäße Lagereinrichtung weist ferner eine Mehrzahl an ersten Anschlagmitteln auf. Die ersten Anschlagmittel sind dazu eingerichtet, eine Bewegung bevorrateter (plattenförmiger) Werkstücke in einer Richtung radial zur Rotationsachse zu unterbinden. Die ersten Anschlagmittel sind ferner bezüglich der Rotationsachse in Umfangsrichtung, und in Umfangsrichtung voneinander beabstandet, angeordnet. Der Abstand zwischen den ersten Anschlagmitteln und der Rotationsachse größer ist als der Abstand zwischen einer ersten Anschlageinrichtung, die dazu eingerichtet ist, eine Bewegung bevorrateter Werkstücke in Bezug auf eine Richtung parallel zur Rotationsachse zu unterbinden, und der Rotationsachse.

Durch die vorstehend beschriebenen ersten Anschlagmittel kann eine weitere Verbesserung der Raumausnutzung (in Bezug auf die Lagereinrichtung) erzielt werden. Gerade dann, wenn eine Vielzahl von (plattenförmigen) Werkstücken im Wesentlichen sternförmig um eine Rotationsachse angeordnet sind, können Spalte zwischen den Werkstücken vorliegen. Die Spaltweite dieser Spalte kann mit zunehmendem Abstand von der Rotationsachse ansteigen. Durch die ersten Anschlagmittel (insbesondere durch die Position der ersten Anschlagmittel) wird es ermöglicht, diese Spalte ebenfalls zum Bevorraten von Werkstücken (die gegebenenfalls zumindest eine geringere Breite und/oder eine geringere Länge aufweisen) zu nutzen.

Erfindungsgemäß dienen zumindest jeweils zwei benachbarte erste Anschlagmittel gleichzeitig als Führungsmittel. Konkret sind die ersten Anschlagmittel dazu eingerichtet, Werkstücke, die zwischen den zumindest zwei benachbarten ersten Anschlagmitteln bezüglich der Rotationsachse in Radialrichtung hindurchgeschoben werden, zu führen.

Durch eine derartige Mehrfachnutzung der ersten Anschlagmitteln kann eine kostengünstige Lagereinrichtung bereitgestellt werden, die dennoch zumindest einige der oben beschriebenen Vorteile und/oder Effekte aufweist.

Mit der vorstehend beschriebenen Lagereinrichtung kann es ferner ermöglicht werden, mehrere von der Lagereinrichtung aufgenommene Werkstücke (sequenziell) in die gleiche oder eine ähnliche Entnahmeposition zu bewegen. Dies kann insbesondere durch die Drehbarkeit der Bevorratungseinheit bezüglich der Rotationsachse auf einfache und effiziente Weise ermöglicht werden. Wenn mehreren Werkstücken die gleiche oder eine ähnliche Entnahmeposition zugeordnet wird, kann eine (für mehrere Werkstücke) im Wesentlichen gleiche (entsprechend geringe) Entnahmetaktzeit erreicht werden. Dies kann wiederum mit verringerten Fertigungskosten assoziiert werden.

Ein weiterer Kostenvorteil kann durch die Raumausnutzung erzielt werden, die durch die oben beschriebene Anordnung der Werkstücke in der Lagereinrichtung erreicht werden kann. Insbesondere kann dadurch eine geringe Aufstellfläche der Lagereinrichtung erreicht werden, wodurch Sekundärkosten eingespart werden können.

Eine vorstehend beschriebene Lagereinrichtung kann sich ferner in vorteilhafter Weise zum gleichzeitigen Bevorraten verschiedener Werkstücke (z.B. Werkstücke mit verschiedenen Abmessungen) eignen.

Der Begriff "plattenförmiges Werkstück" beschreibt im Wesentlichen ein Werkstück, das in Bezug auf eine erste Raumrichtung eine geringere Ausdehnung aufweist, als in Bezug auf eine zweite Raumrichtung und eine dritte Raumrichtung. Die erste Raumrichtung, die zweite Raumrichtung und die dritte Raumrichtung können orthogonal zueinander verlaufen. Die Raumrichtung, in der das Werkstück die geringste Ausdehnung aufweist (z.B. die erste Raumrichtung) kann als Dickenrichtung bezeichnet werden. Eine der zweiten Raumrichtung und der dritten Raumrichtung kann als Längsrichtung bezeichnet werden. Die andere der zweiten Raumrichtung und dritten Raumrichtung kann als Breitenrichtung bezeichnet werden. Beispielsweise kann die größte Ausdehnung eines plattenförmigen Werkstücks als Längsrichtung bezeichnet werden.

Ein Plattenförmiges Werkstück weist bevorzugt eine konstante Dicke auf. Jedoch kann ein plattenförmiges Werkstück gleichermaßen eine variable Dicke aufweisen. Ein plattenförmiges Werkstück kann beispielsweise rechteckig sein, jedoch ist es nicht darauf beschränkt. So kann die Außenkontur (in Bezug auf eine Richtung senkrecht zur Dickenrichtung) beispielsweise auch eine beliebige Kontur sein (z.B. eine Kreiskontur, eine ovale Kontur, eine Trapezkontur etc.). Ferner kann die Außenkontur scharfkantig sein, abgerundet sein, oder einen beliebigen Querschnitt aufweisen.

Ein eingangs benanntes Werkstück kann auch leistenförmig sein. Der Begriff "leistenförmiges Werkstück" beschreibt im Wesentlichen ein Werkstück, das in Bezug auf eine erste Raumrichtung und gleichermaßen in Bezug auf eine zweite Raumrichtung eine geringere Ausdehnung aufweist, als in Bezug auf eine dritte Raumrichtung. Die erste Raumrichtung kann beispielsweise als Dickenrichtung bezeichnet werden. Die zweite Raumrichtung kann beispielsweise als Breitenrichtung bezeichnet werden. Die dritte Raumrichtung kann beispielsweise als Längsrichtung bezeichnet werden. Wenn leistenförmige Werkstücke in der oben beschriebenen Lagereinrichtung aufgenommen sind, sind die Längsrichtungen bevorzugt bezüglich der Rotationsachse radial orientiert.

Um die Drehbarkeit des Bevorratungsbereichs zu ermöglichen, kann der Bevorratungsbereich beispielsweise über ein Lagermittel mit einer Basiseinheit in Verbindung stehen. Die Basiseinheit kann beispielsweise mit einem Aufstellort verbindbar (z.B. anschraubbar) ausgebildet sein. Die Lagereinrichtung kann derart eingerichtet sein, dass der Bevorratungsbereich gegenüber der Basiseinheit einen rotatorischen Freiheitsgrad aufweist, oder dass der Bevorratungsbereich gegenüber der Basiseinheit ausschließlich einen rotatorischen Freiheitsgrad aufweist.

Der Begriff "zumindest abschnittsweise drehbar" umfasst eine bezüglich des Drehwinkels beschränkte Drehbarkeit sowie eine bezüglich des Drehwinkels unbeschränkte Drehbarkeit. Als Beispiele können Drehbarkeit um bis zu 45°, um bis zu 60°, um bis zu 180°, um bis zu 270°, um bis zu 360° oder auch endlose Drehbarkeit genannt werden. Die Drehbarkeit kann ausschließlich auf eine Drehrichtung beschränkt sein, oder mehrere Drehrichtungen (z.B. vorwärts und rückwärts) umfassen.

Die erste Anschlageinrichtung ist bevorzugt eine im Wesentlichen ebene Fläche, insbesondere eine bezüglich der Rotationsachse rotationssymmetrische ebene Fläche. Besonders bevorzugt steht die als ebene Fläche ausgebildete erste Anschlageinrichtung im Wesentlichen senkrecht auf der Rotationsachse. Die erste Anschlageinrichtung kann insbesondere ein Boden eines Bevorratungsbereichs sein.

Mit einer vorstehend beschriebenen ersten Anschlageinrichtung kann eine einfache und effiziente Möglichkeit zur Sicherung der Werkstücke gegen Herausfallen bereitgestellt werden. Die erste Anschlageinrichtung kann somit auch dem Schutz der Werkstücke vor Beschädigung dienen. Ferner kann insbesondere bei Werkstücken mit verschiedenen Abmessungen ein Bereich identifiziert werden (z.B. ein Bereich in der Nähe der ersten Anschlageinrichtung), in dem sich zumindest ein Abschnitt sämtlicher bevorrateter Werkstücke befindet. Somit kann eine reproduzierbare Greifposition für eine Entnahmeeinrichtung benannt werden.

Die erfindungsgemäße Lagereinrichtung kann ferner eine Mehrzahl an ersten Anschlageinrichtungen aufweisen, die jeweils bezüglich der Richtung der Rotationsachse voneinander beabstandet angeordnet sind. Auf diese Weise kann es ermöglicht werden eine Mehrzahl an Werkstücken auch in Bezug auf die Richtung der Rotationsachse nebeneinander (d.h., übereinander, sofern die Rotationsachse parallel zur Gravitationsrichtung orientiert ist) anzuordnen. Insbesondere kann eine in Bezug auf die Umfangsrichtung der Rotationsachse variierende Anzahl an zweiten Anschlagmitteln vorgesehen sein.

Auf diese Weise kann es ermöglicht werden, die Flexibilität einer entsprechenden Lagereinrichtung weiter zu erhöhen.

Die erfindungsgemäße Lagereinrichtung kann ferner eine zweite Anschlageinrichtung aufweisen, die dazu eingerichtet ist, eine Bewegung bevorrateter Werkstücke in Bezug auf eine Richtung radial zur Rotationsachse zu unterbinden. Die zweite Anschlageinrichtung kann beispielsweise eine im Wesentlichen zylindrische Fläche, insbesondere eine bezüglich der Rotationsachse rotationssymmetrische zylindrische Fläche, aufweisen. Alternativ dazu oder zusätzlich kann die zweite Anschlageinrichtung eine im Wesentlichen konisch ausgebildete Fläche, insbesondere eine bezüglich der Rotationsachse rotationssymmetrische zylindrische Fläche aufweisen. Alternativ dazu oder zusätzlich kann die zweite Anschlageinrichtung eine Mehrzahl an zweiten Anschlagmitteln aufweisen, die bezüglich der Rotationsachse in Umfangsrichtung angeordnet sind. Die zweite Anschlageinrichtung kann beispielsweise derart selektiv verstellbar ausgebildet sein, dass verschiedene zweite Anschlagmittel unterschiedliche Abstände zur Rotationsachse aufweisen. Dadurch kann es ermöglicht werden, Werkstücke unterschiedlicher Abmessungen derart anzuschlagen, dass die bezüglich der Rotationsachse radial außenliegenden Kanten der Werkstücke den gleichen Abstand zur Rotationsachse aufweisen. Auf diese Weise kann auch bei Werkstücken unterschiedlicher Abmessungen ein vereinheitlichter Entnahmevorgang gefördert werden.

Die erfindungsgemäße Lagereinrichtung mit ersten Führungsmitteln kann ferner eine Mehrzahl an zweiten Führungsmitteln aufweisen. Die zweiten Führungsmittel können bezüglich der Rotationsachse in Umfangsrichtung angeordnet sein, und zwischen jeweils zwei zweiten Führungsmitteln kann ein Spalt gebildet sein, der sich zum bezüglich der Rotationsachse radialen Einschieben eines (plattenförmigen) Werkstücks in den Bevorratungsbereich der Lagereinrichtung eignet. Der Abstand zwischen den zweiten Führungsmitteln und der Rotationsachse kann geringer sein als der Abstand zwischen den ersten Führungsmitteln und der Rotationsachse. Wenn zusätzlich zu den ersten Führungsmitteln zweite Führungsmitteln vorgesehen sind, kann die Positionsgenauigkeit der in der Lagereinrichtung bevorrateten Werkstücke verbessert werden. Ferner kann es vereinfacht werden, (plattenförmige) Werkstücke unterschiedlichster Abmessungen (insbesondere auch Werkstücke mit vergleichsweise geringen Abmessungen) in der Lagereinrichtung zu fixieren, und beispielsweise gegen Verrutschen zu sichern.

Bei der erfindungsgemäßen Lagereinrichtung können die zweite Anschlageinrichtung, die ersten Anschlagmittel, die zweiten Anschlagmittel, die ersten Führungsmittel und/oder die zweiten Führungsmittel ausschließlich in einem bezüglich der Rotationsachse ersten Endabschnitt des Bevorratungsbereichs gebildet sein, oder sich bezüglich der Axialrichtung der Rotationsachse im Wesentlichen über den gesamten Bevorratungsbereich der Lagereinrichtung erstrecken. Der erste Endabschnitt ist bevorzugt ein Endabschnitt, in dem die erste Anschlageinrichtung gebildet ist. Wenn sich eines oder mehrere der vorstehend genannten Mittel und/oder Einrichtungen in Bezug auf die Axialrichtung der Rotationsachse über den gesamten Bevorratungsbereich erstrecken, kann insbesondere bei Werkstücken mit komplexen Berandungskonturen eine sichere Positionierung gefördert werden. Sind die entsprechenden Mittel und/oder Einrichtungen jedoch nur in einem Endabschnitt gebildet, kann sich dies positiv auf die Herstellungskosten der Lagereinrichtung auswirken. Ferner kann eine Lagereinrichtung mit einer geringen Masse bereitgestellt werden, was sich bei etwaigen Beschleunigungs- und Bremsvorgängen wiederum in einem geringen Energieverbrauch niederschlagen kann.

Bei der erfindungsgemäßen Lagereinrichtung können die erste Anschlageinrichtung, die zweite Anschlageinrichtung, die ersten Anschlagmittel, die zweiten Anschlagmittel, die ersten Führungsmittel, und/oder die zweiten Führungsmittel eine Bürstenstruktur aufweisen. Dadurch kann es ermöglicht werden, einer Beschädigung von Werkstücken (insbesondere: Werkstückkanten) durch die Lagereinrichtung entgegenzuwirken.

Die erfindungsgemäße Lagereinrichtung kann ferner dazu eingerichtet sein, im Bevorratungsbereich aufgenommene Werkstücke zu fixieren. Insbesondere kann die Lagereinrichtung dazu eingerichtet sein, Werkstücke temporär zu fixieren, und bevorzugt auch selektiv zu fixieren. Auf diese Weise kann es ermöglicht werden, die Werkstücke gegen etwaige Prozesskräfte (z.B. Zentrifugalkräfte während einer Rotationsbewegung des Bevorratungsbereichs der Lagereinrichtung) zu sichern, gleichermaßen aber eine effiziente Entnahme von Werkstücken zu ermöglichen. Eine Fixierung kann beispielsweise durch Klemmen, Unterdruck oder Formschluss erzeugt werden.

Bei der erfindungsgemäßen Lagereinrichtung kann die Position der ersten Anschlageinrichtung zumindest abschnittsweise in einer Richtung parallel zur Rotationsachse verstellbar sein. Ferner kann die Position von zumindest einem der ersten Anschlagmittel, zumindest einem der zweiten Anschlagmittel, zumindest einem der ersten Führungsmittel und/oder zumindest einem der zweiten Führungsmittel bezüglich der Rotationsachse in Umfangsrichtung und/oder in Radialrichtung verstellbar sein. Die Verstellbarkeit der ersten Führungsmittel kann automatisiert, beispielsweise unter Verwendung von Aktoren, erfolgen. Als Beispiele für Aktoren können insbesondere elektrisch betriebene Aktoren, hydraulische betriebene Aktoren, pneumatisch betriebene Aktoren und/oder magnetisch betriebene Aktoren benannt werden. Auf diese Weise kann es ermöglicht werden, die Lagereinrichtung flexibel für verschiedene Werkstückgeometrien anzupassen.

Die erfindungsgemäße Lagereinrichtung kann ferner einen Aktor, insbesondere einen elektrisch, hydraulisch oder pneumatisch betriebenen Aktor, aufweisen, der dazu eingerichtet ist, den Bevorratungsbereich der Lagereinrichtung bezüglich der Rotationsachse in eine Umfangsrichtung zu drehen. Dadurch kann es ermöglich werden, mehrere von der Lagereinrichtung aufgenommene Werkstücke automatisiert, beispielsweise ohne Betätigung eines Bedieners, in die gleiche oder in eine ähnliche Entnahmeposition zu bewegen. Somit können die Vorteile der Lagereinrichtung durch den vorstehend beschriebenen Aktor verstärkt auftreten.

Die vorstehend beschriebene Lagereinrichtung kann ferner derart eingerichtet sein, dass der Bevorratungsbereich bezüglich der Umfangsrichtung der Rotationsachse reproduzierbar jede Position aus einer vorbestimmten Anzahl voneinander verschiedener Positionen einzunehmen kann. Die vorbestimmte Anzahl entspricht vorzugsweise der Summe aus der Anzahl der ersten Anschlagmittel und der Anzahl der zweiten Anschlagmittel. Insbesondere kann die Lagereinrichtung dazu ausgebildet sein, jedes Werkstück zumindest in Bezug auf die Umfangsrichtung der Rotationsachse in die gleiche Position zu bewegen, wodurch eine Entnahmeroutine standardisiert, und Herstellungskosten gesenkt werden können.

Darüber hinaus kann die Lagereinrichtung Mittel zum Messen und/oder Ausgeben einer Drehposition des Bevorratungsbereichs aufweisen. Als Beispiele für derartige Mittel können Drehwertgeber, Positionsgeber, Reed-Relais, RFID-chips oder optische Systeme, so wie QR-Codes, genannt werden. Durch das Messen der Drehposition können etwaige Positionsfehler frühzeitig erkannt, und Bearbeitungsfehlern entgegengewirkt werden. Gleichermaßen kann eine gegebenenfalls falsche oder ungenaue Position des Bevorratungsbereichs nachgeregelt werden, wodurch eine höhere Positionsgenauigkeit gefördert wird.

Das erfindungsgemäße Lagersystem weist eine oder mehrere erfindungsgemäße Lagereinrichtungen, sowie zumindest einen Industrieroboter auf. Bevorzugt handelt es sich bei dem Industrieroboter um einen Industrieroboter mit einer Sechsachskinematik. Der Industrieroboter weist einen Robotergreifer auf, der dazu eingerichtet ist, ein Werkstück im Bereich einer Schmalseite desselben zu halten. Das Lagersystem weist bevorzugt ferner zumindest eine Fördereinrichtung, insbesondere ein Förderband und/oder ein Rollenband, auf.

Durch das vorstehend beschriebene Lagersystem wird eine einfache und effiziente Möglichkeit bereitgestellt, verschiedene Werkstücke mit einer im Wesentlichen konstanten Taktzeit aus einer Lagereinrichtung zu entnehmen, und einer Bearbeitungseinrichtung bereitzustellen.

Das erfindungsgemäße Lagersystem kann ferner eine Steuereinheit aufweisen, die dazu eingerichtet ist, eine Position bezüglich der Umfangsrichtung der Rotationsachse des Bevorratungsbereichs der zumindest einen Lagereinrichtung zu steuern. Insbesondere kann die Steuereinheit dazu eingerichtet sein, Positionen bezüglich der Umfangsrichtungen der Rotationsachsen der Bevorratungsbereiche mehrerer Lagereinrichtungen unabhängig voneinander zu steuern. Ferner kann die Steuereinheit dazu eingerichtet sein, eine Verfahrbewegung des Industrieroboters, und bevorzugt auch zumindest einen Parameter der Fördereinrichtung, insbesondere einen Betrieb und/oder eine Geschwindigkeit der Fördereinrichtung, zu steuern.

Eine Steuereinheit wie vorstehend beschrieben kann verschiedene Komponenten des Lagersystems in vorteilhafter Weise aufeinander abstimmen. Insbesondere kann eine Steuereinheit Taktzeiten verschiedener Komponenten aufeinander abstimmen. Somit kann es ermöglicht werden, Handhabungsvorgänge zu parallelisieren, und Fertigungszeiten zu minimieren.

Bei der erfindungsgemäßen Verwendung einer oben beschriebenen Lagereinrichtung oder eines oben beschriebenen Lagersystems ist die Rotationsachse im Wesentlichen parallel zur Gravitationsrichtung orientiert. Bevorzugt ist die erste Anschlageinrichtung ferner in einem unteren Endabschnitt des Bevorratungsbereichs gebildet. Dadurch kann eine besonders einfache und effiziente Werkstückentnahme ermöglicht werden. Beispielsweise können Werkstücke zur Entnahme im Bereich eines Außenumfangsabschnitts (bezüglich der Rotationsachse) des Bevorratungsbereichs entnommen (bzw. zur Entnahme gegriffen) werden.

Ferner wird ein Verfahren zur Handhabung von Werkstücken, insbesondere von plattenförmigen Werkstücken, offenbart. Die Werkstücke bestehen bevorzugt zumindest abschnittsweise aus Holz, Holzhaltigem Werkstoff, Verbundwerkstoff, Kunststoff, Aluminium oder dergleichen, und weisen jeweils eine Länge, eine Breite und eine Dicke auf. Bei der Durchführung des Verfahrens wird eine oben beschriebene Lagereinrichtung oder eines der oben beschriebenen Lagersysteme verwendet. Das erfindungsgemäße Verfahren weist zumindest die folgenden Schritte auf:
- Entnehmen eines Werkstücks aus einem Bevorratungsbereich einer Lagereinrichtung, wobei der Bevorratungsbereich der Lagereinrichtung bezüglich einer im Wesentlichen parallel zur Gravitationsrichtung orientierten Rotationsachse drehbar gelagert ist, und wobei das Werkstück vor dem Entnehmen derart im Bevorratungsbereich der Lagereinrichtung orientiert ist, dass die Breitenrichtung oder die Längsrichtung des Werkstücks bezüglich der Rotationsachse im Wesentlichen radial orientiert ist, und dass die jeweils anderen der Breiten- oder Längsrichtung des Werkstücks im Wesentlichen parallel zur Rotationsachse orientiert ist;
- Drehen des Bevorratungsbereichs der Lagereinrichtung um die Rotationsachse.

Bevorzugt sind vor dem Schritt des Entnehmens eine Mehrzahl an Werkstücken derart im Bevorratungsbereich der Lagereinrichtung angeordnet, dass die Breitenrichtungen oder die Längsrichtungen aller Werkstücke bezüglich der Rotationsachse im Wesentlichen radial orientiert sind, und dass die jeweils anderen der Breiten- oder Längsrichtungen aller Werkstücke im Wesentlichen parallel zur Rotationsachse orientiert sind.

Dem erfindungsgemäßen Verfahren können vergleichbare oder ähnliche Vorteile und Effekte zugeordnet werden, wie den oben beschriebenen Lagereinrichtungen und/oder Lagersystemen.

Bei dem erfindungsgemäßen Verfahren können die Werkstücke ferner in Umfangsrichtung der Rotationsachse derart alternierend angeordnet sein, dass jeweils zwei benachbarte Werkstücke in Radialrichtung der Rotationsachse eine unterschiedliche Ausdehnung aufweisen. Dies kann beispielsweise unter Verwendung erster und zweiter Anschlagmittel, wie oben in Bezug auf die Lagereinrichtung beschrieben, erzielt werden. Durch die vorstehend beschriebene alternierende Anordnung kann eine weitere Verbesserung der Raumausnutzung (in Bezug auf die Lagereinrichtung) gefördert werden.

Bevorzugt weisen die bezüglich der Radialrichtung der Rotationsachse außenliegende Schmalseiten sämtlicher Werkstücke (vor dem Schritt des Entnehmens) im Wesentlichen den gleichen Abstand zur Rotationsachse auf. Dadurch kann es ermöglicht werden, bei mehreren Werkstücken (auch bei solchen mit unterschiedlichen Geometrien) gleiche oder ähnliche Entnahmeposition vorzusehen, wodurch eine Effizienzerhöhung des Entnahmeprozesses weiter gefördert werden kann.

Ferner kann bei dem erfindungsgemäßen Verfahren der Schritt des Entnehmens zumindest teilweise mit einem Industrieroboter, bevorzugt einem Industrieroboter mit einer Sechsachskinematik, durchgeführt werden. Der Industrieroboter kann einen Greifer aufweisen. Der Schritt des Entnehmens kann das Greifen des Werkstücks im Bereich einer in Radialrichtung der Rotationsachse außenliegenden Schmalseite des Werkstücks beinhalten. Der Einsatz eines vorstehend beschriebenen Industrieroboters kann mit einer hohen Genauigkeit und Geschwindigkeit in Bezug auf einen Entnahmevorgang assoziiert werden. Ferner eignen sich derartige Industrieroboter für die Handhabung von Werkstücken unterschiedlichster Größen und Massen, wodurch eine Flexibilität des Entnahmeprozesses verbessert werden kann.

Das erfindungsgemäße Verfahren kann einen Zuführschritt des entnommenen Werkstücks in eine Fördereinrichtung aufweisen. Insbesondere kann der Zuführschritt ein Auflegen des entnommenen Werkstücks auf ein Förderband beinhalten. Dadurch kann es auf effiziente Weise ermöglicht werden, gegebenenfalls weite Wegstrecken zwischen einer Lagereinrichtung oder einem Lagersystem und einer Bearbeitungseinrichtung zurückzulegen. Ferner kann einer Fördereinrichtung eine gewisse Pufferwirkung zugeschrieben werden, sodass es ermöglicht wird, (unvorhergesehene) Bearbeitungszeitschwankungen einer Bearbeitungsreinrichtung zu kompensieren.

Das erfindungsgemäße Verfahren kann ferner einen Schritt des Zuführens des entnommenen Werkstücks in eine Bearbeitungsmaschine, insbesondere, auflegen des Werkstücks auf einen Bearbeitungstisch einer Bearbeitungsmaschine beinhalten. Bevorzugt weist das Verfahren ferner die Durchführung zumindest einer Bearbeitungsoperation durch die Bearbeitungsmaschine auf. Besonders bevorzugt weisen die Lagereinrichtung, der Industrieroboter, die Fördereinrichtung und/oder die Bearbeitungsmaschine eine gemeinsame Steuereinheit auf. Alternativ können die Lagereinrichtung, der Industrieroboter, die Fördereinrichtung und/oder die Bearbeitungsmaschine jeweils eine eigene Steuereinheit aufweisen, wobei sämtliche der jeweiligen Steuereinheiten dazu eingerichtet sind, mit jeder anderen der jeweiligen Steuereinheiten Signale auszutauschen.

Bei einem oben beschriebenen Verfahren kann eine Synchronisierung von Taktzeiten einzelner Verfahrensschritte einfach und effizient gefördert werden.

Bei dem erfindungsgemäßen Verfahren kann ferner eine Mehrzahl an Lagereinrichtungen vorgesehen sein. Bevorzugt sind sämtliche Lagereinrichtungen (insbesondere die Rotationsachsen sämtlicher Lagereinrichtungen) im Wesentlichen gleich beabstandet vom Industrieroboter angeordnet. Besonders bevorzugt wird während des Entnehmens eines Werkstücks aus einer ersten Lagereinrichtung der Mehrzahl an Lagereinrichtungen ein Bevorratungsbereich einer zweiten Lagereinrichtung der Mehrzahl an Lagereinrichtungen um eine Rotationsachse der zweiten Lagereinrichtung gedreht. Das drehen einer zweiten Lagereinrichtung während des Entnehmens eins Werkstücks aus einer ersten Lagereinrichtung kann als Parallelisierung von Verfahrensschritten angesehen werden. Durch eine derartige Parallelisierung kann es ermöglicht werden, Fertigungszeiten zu reduzieren, und eine Verfahrenseffizienz zu verbessern.

### Kurze Beschreibung der Zeichnungen

Weitere Merkmale und Vorteile der erfindungsgemäßen Vorrichtung, der erfindungsgemäßen Verwendung und/oder des erfindungsgemäßen Verfahrens ergeben sich aus der nachfolgenden Beschreibung von Ausführungsformen unter Bezugnahme auf die beiliegenden Zeichnungen. Von diesen Zeichnungen zeigt:
- Fig. 1a: eine perspektivische Ansicht einer Ausführungsform der erfindungsgemäßen Lagereinrichtung;
- Fig. 1b: eine Draufsicht verschiedener Ausführungsformen der erfindungsgemäßen Lagereinrichtung;
- Fig. 2a: eine vergrößerte Ansicht des Details X aus Fig. 1b;
- Fig. 2b: eine vergrößerte Ansicht des Details Y aus Fig. 1b;
- Fig. 3a: eine perspektivische Ansicht einer Ausführungsform des erfindungsgemäßen Lagersystems;
- Fig. 3b: eine Draufsicht einer Ausführungsform des erfindungsgemäßen Lagersystems.

### Beschreibung von Ausführungsformen

Die nachfolgend beschriebenen Ausführungsformen stellen lediglich Beispiele dar und sind nicht als beschränkend anzusehen. Gleiche Bezugszeichen, die in verschiedenen Figuren aufgeführt sind, benennen identische, einander entsprechende, oder funktionell ähnliche Elemente.

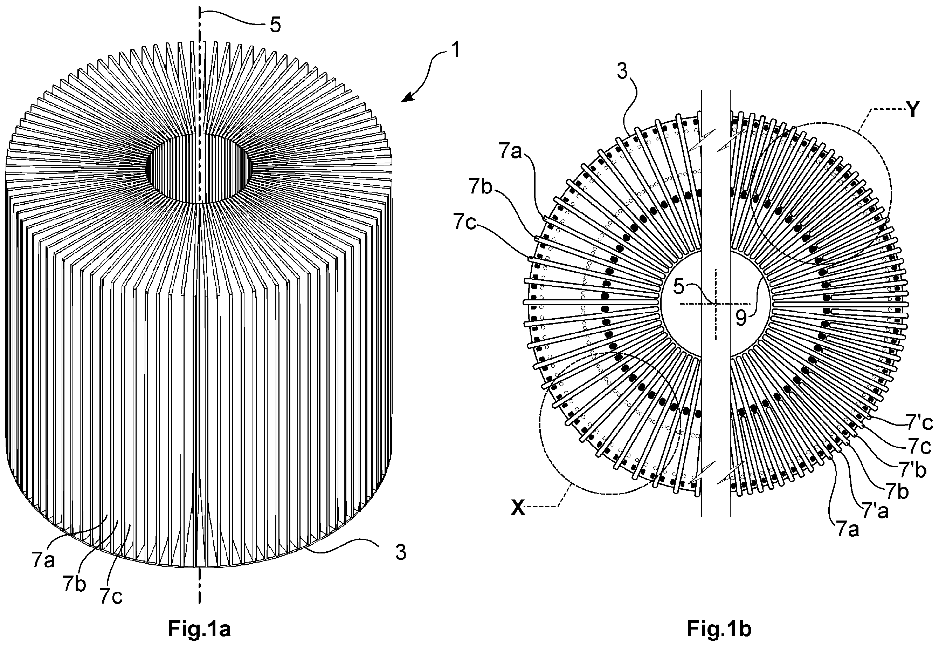

Fig. 1a zeigt eine perspektivische Ansicht einer Ausführungsform einer erfindungsgemäßen Lagereinrichtung 1 zum Bevorraten plattenförmiger Werkstücke 7a, 7b, 7c. Die Lagereinrichtung 1 weist einen Bevorratungsbereich auf, der bezüglich einer Rotationsachse 5 drehbar ausgebildet ist. Der Bevorratungsbereich ist im dargestellten Fall ein Raumabschnitt der Lagereinrichtung 1, in dem die plattenförmigen Werkstücke 7a, 7b, 7c im Wesentlichen sternförmig angeordnet sind. Im Bevorratungsbereich der Lagereinrichtung 1 ist eine Mehrzahl an plattenförmigen Werkstücken 7a, 7b, 7c derart aufgenommen, dass die Breitenrichtungen der plattenförmigen Werkstücke 7a, 7b, 7c bezüglich der Rotationsachse 5 im Wesentlichen radial orientiert sind. Ferner sind die plattenförmigen Werkstücke 7a, 7b, 7c derart im Bevorratungsbereich angeordnet, dass die Längsrichtungen der plattenförmigen Werkstücke 7a, 7b, 7c im Wesentlichen parallel zur Rotationsachse 5 orientiert sind. Die dargestellten plattenförmigen Werkstücke 7a, 7b, 7c sind im wesentlichen Rechteckförmig und weisen ferner im Wesentlichen gleiche Längen, Breiten und Dicken auf. Die Dickenrichtungen der plattenförmigen Werkstücke 7a, 7b, 7c sind in Bezug auf die Rotationsachse 5 in Umfangsrichtung orientiert. Die Lagereinrichtung 1 (insbesondere: der Bevorratungsbereich der Lagereinrichtung 1) weist eine erste Anschlageinrichtung 3 auf. diese erste Anschlageinrichtung ist dazu eingerichtet, eine Bewegung der bevorrateten plattenförmigen Werkstücke 7a, 7b, 7c, in Bezug auf eine Richtung parallel zur Rotationsachse 5 zu unterbinden. Eine derartige Bewegung könnte beispielsweise durch eine Gravitationskraft veranlasst sein. In dem in Fig. 1a dargestellten Fall ist die erste Anschlageinrichtung 3 eine im Wesentlichen ebene Fläche, die bezüglich der Rotationsachse 5 rotationssymmetrisch ausgebildet ist. Die erste Anschlageinrichtung 3 steht ferner im Wesentlichen senkrecht auf der Rotationsachse 5. In dem in Fig. 1a dargestellten Fall kann die erste Anschlageinrichtung 3 auch als Bodenplatte (insbesondere als kreisrunde Bodenplatte) bezeichnet werden.

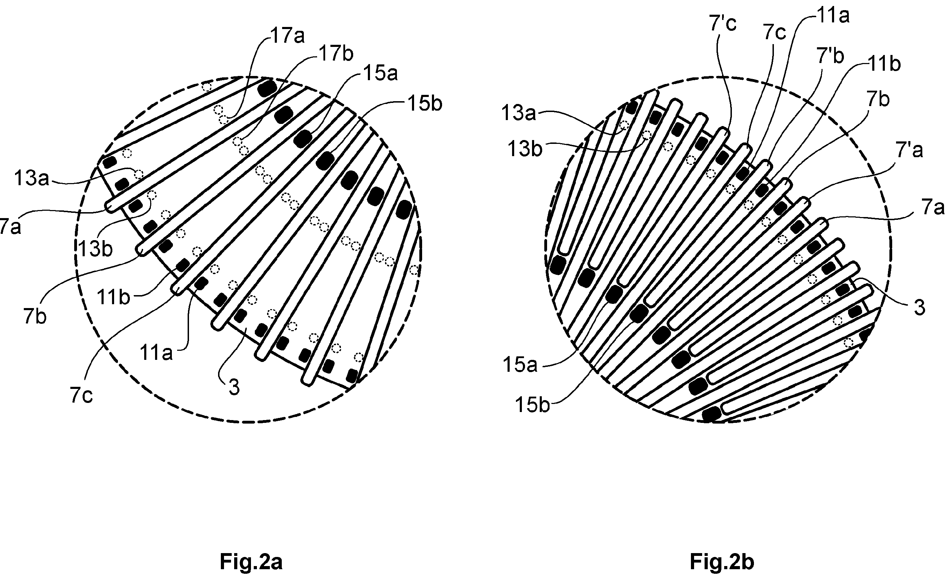

Fig. 1b zeigt verschiedene Ausführungsformen erfindungsgemäßen Lagereinrichtung, jeweils als Bruchansicht einer Draufsicht. Insbesondere zeigt ein linker Bereich in Fig. 1b eine Bruchansicht einer Draufsicht einer ersten Ausführungsform der erfindungsgemäßen Lagereinrichtung. Ein rechter Bereich in Fig. 1b zeigt eine Bruchansicht einer Draufsicht einer zweiten Ausführungsform der erfindungsgemäßen Lagereinrichtung. Fig. 2a zeigt eine vergrößerte Ansicht des Details X aus der ersten Ausführungsform in Fig. 1b. Fig. 2b zeigt eine vergrößerte Ansicht des Details Y der zweiten Ausführungsform aus Fig. 1b.

Die erste Ausführungsform (vgl. linker Bereich in Fig. 1b, sowie Fig. 2a) der erfindungsgemäßen Lagervorrichtung entspricht im Wesentlichen der in Fig. 1a dargestellten Ausführungsform. Jedoch weist die erste Ausführungsform der Lagereinrichtung ferner eine zweite Anschlageinrichtung 9 auf. Die zweite Anschlageinrichtung 9 ist dazu eingerichtet, eine Bewegung bevorrateter plattenförmiger Werkstücke 7a, 7b, 7c in Bezug auf eine Richtung radial zur Rotationsachse 5 zu unterbinden. Insbesondere ist die zweite Anschlageinrichtung 9 derart ausgebildet, dass plattenförmige Werkstücke 7a, 7b, 7c, die in den Bevorratungsbereich der Lagereinrichtung eingebracht werden sollen, radial (bezüglich der Rotationsachse) nur bis zu einem vorbestimmten Ort in die Lagereinrichtung eindringen können. Die zweite Anschlageinrichtung 9 weist eine im Wesentlichen zylindrische Fläche auf, die bezüglich der Rotationsachse rotationssymmetrisch ist. Die zweite Anschlageinrichtung 9 kann auch als Innenwand angesehen werden, die im Wesentlichen parallel zur Rotationsachse 5 gebildet ist. In einem bezüglich der Rotationsachse 5 radial innenliegenden Abschnitt der zweiten Anschlageinrichtung 9 kann ein Lagermittel (beispielsweise ein Wälzlager und/oder ein Gleitlager, bzw. eine Gruppe von Wälzlagern und/oder Gleitlagern) vorgesehen sein. Die dargestellte Konfiguration der zweiten Anschlageinrichtung 9 kann somit insofern auch als vorteilhaft angesehen werden, als dass sie das Lagermittel vor Verunreinigung schützen kann. Hierzu ist die zweite Anschlageinrichtung 9 bevorzugt als geschlossene Fläche ausgebildet.

Die erfindungsgemäße Lagereinrichtung 1 weist ferner eine Mehrzahl an ersten Führungsmitteln 11a, 11b auf, die in Bezug auf die Rotationsachse 5 im Wesentlichen in Umfangsrichtung angeordnet sind. Zwischen jeweils zwei ersten Führungsmitteln 11a, 11b ist ein Spalt gebildet, der sich zum (bezüglich der Rotationsachse 5) radialen Einschieben plattenförmiger Werkstück 7a, 7b, 7c in den Bevorratungsbereich der Lagereinrichtung 1 eignet. Die breite des Spalts entspricht zumindest der Dicke der zu bevorratenden Werkstücke. Bevorzugt weicht die Spaltweite um nicht mehr als 20 %, und besonders bevorzugt um nicht mehr als 10 % von der Dicke der zu bevorratenden Werkstücke ab.

Die erfindungsgemäße Lagereinrichtung 1 weist ferner eine Mehrzahl an ersten Anschlagmitteln 15a, 15b auf.

Die ersten Anschlagmittel übernehmen im dargestellten Zustand in erster Linie eine Führungs- und Stabilisierungsaufgabe (insbesondere eine bezüglich der Rotationsachse 5 radiale Führungsaufgabe, und eine bezüglich der Rotationsachse 5 in Umfangsrichtung orientierte Stabilisierungsaufgabe), ähnlich den ersten Führungsmitteln 11a, 11b. Die ersten Anschlagmittel 15a, 15b sind ferner bezüglich der Rotationsachse 5 in Umfangsrichtung angeordnet, sodass der Abstand zwischen jeweils ersten Anschlagmitteln 15a, 15b und der Rotationsachse 5 größer ist als der Abstand zwischen der ersten Anschlageinrichtung 9 und der Rotationsachse 5. Die ersten Anschlagmittel 15a, 15b sind ferner in Umfangsrichtung voneinander beabstandet angeordnet, sodass zwischen jeweils zwei der ersten Anschlagmittel 15a, 15b ein Spalt gebildet ist, der sich zum dazwischenschieben eines plattenförmigen Werkstücks eignet. Für den Spalt zwischen jeweils zwei ersten Anschlagmitteln 15a, 15b können ähnlich Voraussetzungen gelten, wie oben bereits in Bezug auf die ersten Führungsmittel 11a, 11b beschrieben wurde.

Die Lagereinrichtung 1 gemäß der ersten Ausführungsform weist ferner eine Mehrzahl an zweiten Führungsmitteln 13a, 13b, 17a, 17b auf. Die zweiten Führungsmittel 13a, 13b, 17a, 17b sind bezüglich der Rotationsachse 5 in Umfangsrichtung angeordnet, wobei zwischen jeweils zwei zweiten Führungsmitteln 13a, 13b, 17a, 17b ein Spalt gebildet ist, der sich zum bezüglich der Rotationsachse 5 radialen Einschieben eines plattenförmigen Werkstücks 7a, 7b, 7c in den Bevorratungsbereich der Lagereinrichtung 1 eignet. Der Abstand zwischen den zweiten Führungsmitteln 13a, 13b, 17a, 17b und der Rotationsachse 5 ist geringer, als der Abstand zwischen den ersten Führungsmitteln 11a, 11b und der Rotationsachse. Ferner ist der Abstand zwischen den außenliegenden zweiten Führungsmitteln 13a, 13b und der Rotationsachse 5 geringer, als der Abstand zwischen innenliegenden zweiten Führungsmitteln 17a, 17b und der Rotationsachse.

Die ersten Führungsmittel 11a, 11b und die ersten Anschlagmittel 15a, 15b können sich über die gesamte Höhe (Richtung parallel zur Rotationsachse 5) erstrecken. Die zweiten Führungsmittel 13a, 13b, 17a, 17b können beispielsweise ausschließlich in oberen und/oder unteren Endabschnitten (bezüglich der Rotationsachse 5) des Bevorratungsbereichs vorgesehen sein.

Einer Lagereinrichtung 1 der ersten Ausführungsform kann eine vorbestimmte Anzahl n an Lagerplätzen (in Bezug auf plattenförmige Werkstücke 7a, 7b, 7c) zugeordnet werden. Im Fall der ersten Ausführungsform kann die Anzahl der ersten Führungsmittel 11a, 11b zumindest oder genau 2n betragen. Ferner kann die Anzahl der außenliegenden zweiten Führungsmittel 13a, 13b zumindest oder genau 2n betragen. Gleichermaßen kann die Anzahl der innenliegenden zweiten Führungsmittel 17a, 17b zumindest oder genau 2n betragen. Die Anzahl der ersten Anschlagmittel 15a, 15b kann zumindest oder genau n betragen.

Die zweite Ausführungsform der erfindungsgemäßen Lagereinrichtung 1 (vgl. rechter Bereich in Fig. 1b, sowie Fig. 2b) entspricht im Wesentlichen der ersten Ausführungsform, jedoch entfallen bei der zweiten Ausführungsform die innenliegenden zweiten Führungsmittel 17a, 17b. Darüber hinaus sind in der Lagereinrichtung 1 gemäß der zweiten Ausführungsform zusätzlich plattenförmige Werkstücke 7'a, 7'b, 7'c angeordnet, die jeweils eine geringere Breite aufweisen. Die ersten Anschlagmittel 15a, 15b (die bei der ersten Ausführungsform in erster Linie eine Führungswirkung für die plattenförmigen Werkstücke 7a, 7b, 7c übernehmen) wirken bei der zweiten Ausführungsform ferner als radiale Anschläge für die plattenförmigen Werkstücke 7'a, 7'b, 7'c. Wie beispielsweise aus Fig. 2b hervorgeht, weisen die in Bezug auf die Radialrichtung der Rotationsachse außenliegende Schmalseiten sämtlicher plattenförmiger Werkstücke 7a, 7b, 7c, 7'a, 7'b, 7'c im Wesentlichen den gleichen Abstand zur Rotationsachse 5 auf.

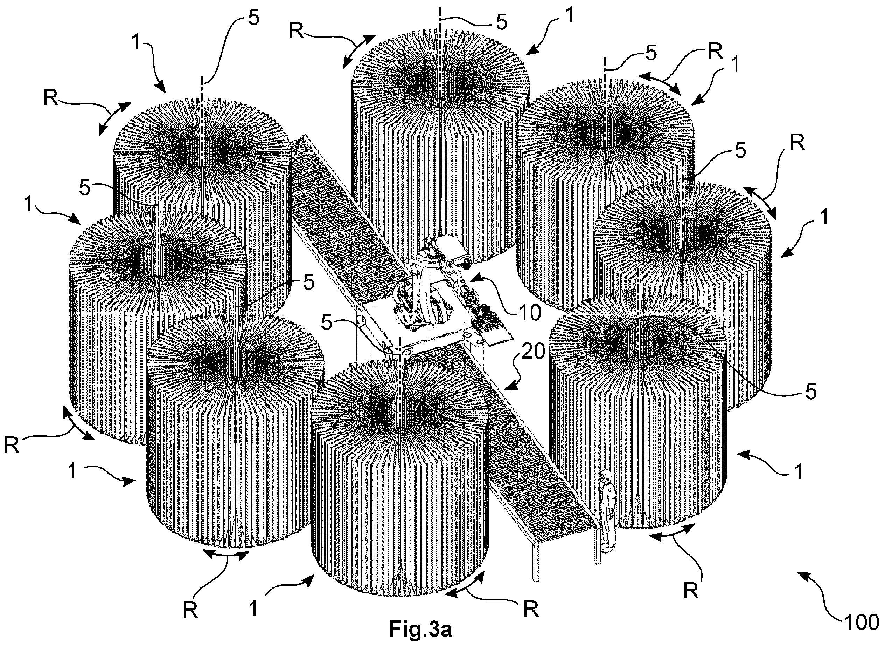

Fig. 3a zeigt eine perspektivische Ansicht einer Ausführungsform eines erfindungsgemäßen Lagersystems 100.

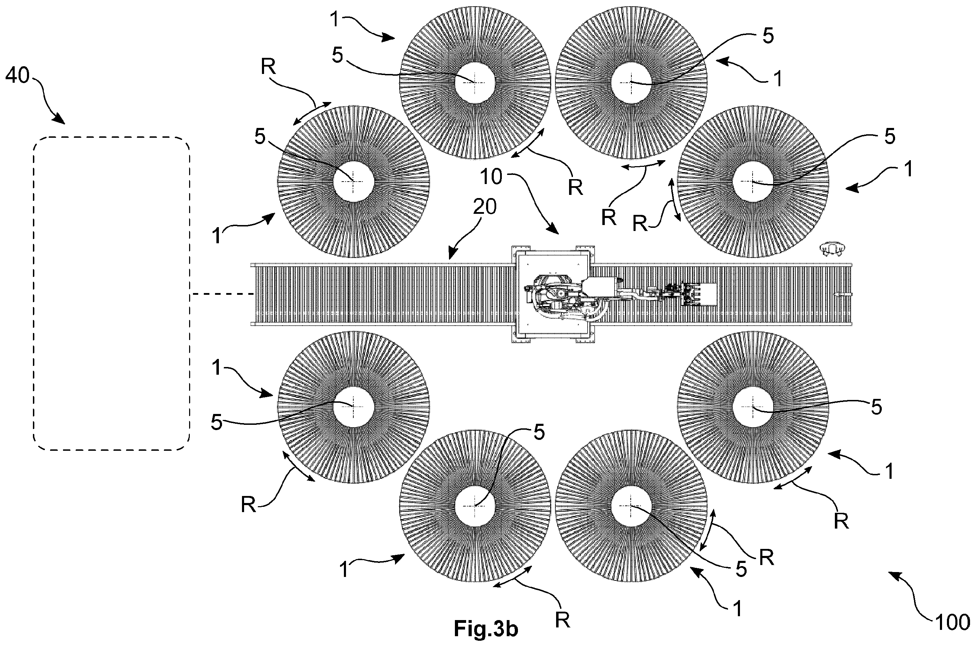

Fig. 3b zeigt eine Draufsicht einer Ausführungsform eines erfindungsgemäßen Lagersystems 100. Die Ausführungsform aus Fig. 3b kann der Ausführungsform aus Fig. 3a entsprechen.

Die in Fig. 3a und 3b dargestellten Lagersysteme 100 weisen acht erfindungsgemäße Lagereinrichtungen 1, einen Industrieroboter 10 und eine Fördereinrichtung 20 auf. Jede der Lagereinrichtungen 1 ist dazu ausgebildet, einen Bevorratungsbereich 1 um eine Rotationsachse 5 zu drehen. Mögliche Drehrichtungen sind durch das Bezugszeichen R angezeigt. Der dargestellte Industrieroboter 10 ist ein Industrieroboter mit einer Sechsachskinematik, jedoch kann auch ein anderer Typ verwendet werden, beispielsweise ein Linearroboter oder ein Portalroboter. Der Industrieroboter 10 weist zumindest einen Robotergreifer auf, der dazu eingerichtet ist, ein plattenförmiges Werkstück im Bereich einer Schmalseite desselben zu halten. Die Fördereinrichtung 20 ist als Förderband oder als Rollenband ausgebildet. Der Industrieroboter 10 ist (in Bezug auf eine Gravitationsrichtung) über der Fördereinrichtung 20 angeordnet, derart, dass die Fördereinrichtung 20 unterhalb des Industrieroboters 10 Werkstücke hindurchfördern kann. Die Achsen 5 sämtlicher Lagereinrichtungen 1 sind im Wesentlichen gleich von einer Aufstellplattform des Industrieroboters 10 beabstandet.

In Fig. 3b ist eine Bearbeitungsmaschine 40 schematisch dargestellt, die in fördertechnischer und/oder Steuerungstechnischer Verbindung mit der Fördereinrichtung 20 steht.

Obgleich die vorstehend beschriebenen Ausführungsformen beispielhaft anhand von plattenförmigen Werkstücken dargelegt sind, können die plattenförmigen Werkstücke auch durch andere Arten von Werkstücken, beispielsweise durch leistenförmige Werkstücke oder eine Kombination aus plattenförmigen und leistenförmigen Werkstücken, ersetzt werden, ohne vom Konzept der vorliegenden Offenbarung abzuweichen.

Ohne Bezugnahme auf eine bestimmte Figur ist ferner eine Ausführungsform der erfindungsgemäßen Lagereinrichtung denkbar, die mehrere Bevorratungsbereiche aufweist. Diese mehreren Bevorratungsbereiche können beispielsweise vergleichbar mit der Bahnkurve eines Förderbandes rotatorisch bezüglich einer ersten Rotationsachse, anschließend translatorisch, anschließend rotatorisch bezüglich einer zweiten Achse, und anschließend wieder translatorisch bewegt werden.

Obwohl vorstehend beispielhaft verschiedene Ausführungsformen von Vorrichtungen und Verfahren gemäß der vorliegenden Offenbarung beschrieben sind, ist zu verstehen, dass es sich dabei lediglich um nicht beschränkende Beispiele handelt. Es ist für den Fachmann klar erkennbar, dass Variationen in Bezug auf Geometrien und andere Details vorgenommen werden können, ohne vom Konzept der vorliegenden Offenbarung abzuweichen.

## Patentansprüche

1. Lagereinrichtung (1) zum Bevorraten von Werkstücken (7,7a,7b,7c,7'a,7'b,7'c), insbesondere von plattenförmigen Werkstücken, die bevorzugt zumindest abschnittsweise aus Holz, holzhaltigem Werkstoff, Verbundwerkstoff, Kunststoff, Aluminium oder dergleichen bestehen, und die jeweils eine Länge, eine Breite und eine Dicke aufweisen,
wobei
die Lagereinrichtung (1) zumindest einen Bevorratungsbereich aufweist, der bezüglich einer Rotationsachse (5) zumindest abschnittsweise drehbar ausgebildet ist,
der Bevorratungsbereich der Lagereinrichtung (1) dazu eingerichtet ist, eine Mehrzahl an Werkstücken (7,7a,7b,7c,7'a,7'b,7'c), insbesondere eine Mehrzahl an plattenförmigen Werkstücken, derart aufzunehmen, dass die Breitenrichtungen oder die Längsrichtungen der Werkstücke (7,7a,7b,7c,7'a,7'b,7'c) bezüglich der Rotationsachse (5) im Wesentlichen radial orientiert sind, und dass die jeweils anderen der Breiten- oder Längsrichtungen der Werkstücke (7,7a,7b,7c,7'a,7'b,7'c) im Wesentlichen parallel zur Rotationsachse (5) orientiert sind,
die Lagereinrichtung (1) ferner:
eine erste Anschlageinrichtung (3), die dazu eingerichtet ist, eine Bewegung bevorrateter Werkstücke (7, 7a, 7b, 7c, 7' a, 7'b, 7' c) in eine Richtung parallel zur Rotationsachse (5) zu unterbinden, und
eine Mehrzahl an ersten Führungsmitteln (11,11a,11b) aufweist,
die bezüglich der Rotationsachse (5) in Umfangsrichtung angeordnet sind, wobei zwischen jeweils zwei ersten Führungsmitteln (11,11a,11b) ein Spalt gebildet ist, der sich zum bezüglich der Rotationsachse (5) radialen Einschieben eines Werkstücks (7,7a,7b,7c) in den Bevorratungsbereich der Lagereinrichtung (1) eignet, und
**dadurch gekennzeichnet, dass** die Lagereinrichtung (1) eine Mehrzahl an ersten Anschlagmitteln (15,15a,15b) aufweist, die dazu eingerichtet sind, eine Bewegung bevorrateter Werkstücke (7'a,7'b,7'c) in einer Richtung radial zur Rotationsachse (5) zu unterbinden,
wobei die ersten Anschlagmittel (15,15a,15b) bezüglich der Rotationsachse (5) in Umfangsrichtung, und in Umfangsrichtung voneinander beabstandet, angeordnet sind,
wobei der Abstand zwischen den ersten Anschlagmitteln (15,15a,15b) und der Rotationsachse (5) größer ist als der Abstand zwischen einer ersten Anschlageinrichtung (3) und der Rotationsachse (5), und
wobei zumindest zwei benachbarte, bevorzugt jedoch sämtliche, erste Anschlagmittel (15,15a,15b) dazu eingerichtet sind, Werkstücke (7,7a,7b,7c), die zwischen den zumindest zwei benachbarten ersten Anschlagmitteln (15,15a,15b) bezüglich der Rotationsachse (5) in Radialrichtung hindurchgeschoben werden, zu führen.

2. Lagereinrichtung (1) nach Anspruch 1, wobei die erste Anschlageinrichtung (3) eine im Wesentlichen ebene Fläche, insbesondere eine bezüglich der Rotationsachse (5) rotationssymmetrische ebene Fläche, aufweist, die besonders bevorzugt im Wesentlichen senkrecht auf der Rotationsachse (5) steht.

3. Lagereinrichtung (1) nach Anspruch 1 oder 2, die eine zweite Anschlageinrichtung (9) aufweist, die dazu eingerichtet ist, eine Bewegung bevorrateter Werkstücke (7,7a,7b, 7c) in eine Richtung radial zur Rotationsachse (5) zu unterbinden, wobei die zweite Anschlageinrichtung (9) bevorzugt eine im Wesentlichen zylindrisch oder konisch ausgebildete Fläche, insbesondere eine bezüglich der Rotationsachse rotationssymmetrische zylindrisch oder konisch ausgebildete Fläche, aufweist.

4. Lagereinrichtung (1) nach Anspruch 3, bei der die zweite Anschlageinrichtung eine Mehrzahl an zweiten Anschlagmitteln aufweist, die bezüglich der Rotationsachse (5) in Umfangsrichtung angeordnet sind.

5. Lagereinrichtung nach einem der vorhergehenden Ansprüchen, die ferner eine Mehrzahl an zweiten Führungsmitteln (13,13a,13b,13c,17,17a,17b) aufweist, die bezüglich der Rotationsachse (5) in Umfangsrichtung angeordnet sind, wobei zwischen jeweils zwei zweiten Führungsmitteln (13,13a,13b,13c,17,17a,17b) ein Spalt gebildet ist, der sich zum bezüglich der Rotationsachse (5) radialen Einschieben eines Werkstücks (7,7a,7b,7c) in den Bevorratungsbereich der Lagereinrichtung (1) eignet, und wobei der Abstand zwischen den zweiten Führungsmitteln (13,13a,13b,13c,17,17a,17b) und der Rotationsachse (5) geringer ist, als der Abstand zwischen den ersten Führungsmitteln (11,11a,11b) und der Rotationsachse.

6. Lagereinrichtung nach deinem der Ansprüche 3 bis 5, bei der die zweite Anschlageinrichtung (9), die ersten Anschlagmittel (15, 15a, 15b), die zweite Anschlagsmittel, die ersten Führungsmittel (11,11a,11b) und/oder die zweiten Führungsmittel (13,13a,13b,13c,17,17a,17b) ausschließlich in einem bezüglich der Rotationsachse (5) ersten Endabschnitt des Bevorratungsbereichs gebildet sind, oder sich bezüglich der Axialrichtung der Rotationsachse (5) im Wesentlichen über den gesamten Bevorratungsbereich der Lagereinrichtung (1) erstrecken, wobei der erste Endabschnitt bevorzugt ein Endabschnitt ist, in dem die erste Anschlageinrichtung (3) gebildet ist.

7. Lagereinrichtung nach einem der Ansprüche 2 bis 6, bei der die erste Anschlageinrichtung (3), die zweite Anschlageinrichtung, die ersten Anschlagmittel (15, 15a, 15b), die zweiten Anschlagmittel, die ersten Führungsmittel (11, 11a, 11b), und/ oder die zweiten Führungsmittel (13, 13a, 13b, 17, 17a, 17b), eine Bürstenstruktur aufweisen.

8. Lagereinrichtung (1) nach einem der vorstehenden Ansprüche, die ferner dazu eingerichtet ist, im Bevorratungsbereich aufgenommene Werkstücke (7, 7a, 7b, 7c, 7'a,7'b,7'c) zu fixieren, insbesondere temporär zu fixieren, und bevorzugt selektiv zu fixieren.

9. Lagereinrichtung (1) nach einem der Ansprüche 2 bis 8, bei der die Position der ersten Anschlageinrichtung (3) zumindest abschnittsweise in einer Richtung parallel zur Rotationsachse (5) verstellbar ist.

10. Lagereinrichtung nach einem der Ansprüche 3 bis 9, bei der die Position von zumindest einem ersten Anschlagmittel (15, 15a, 15b), zumindest einem zweiten Anschlagmittel, zumindest einem ersten Führungsmittel (11,11a,11b) und/oder zumindest einem zweiten Führungsmittel (13,13a,13b,13c,17,17a,17b) bezüglich der Rotationsachse (5) in Umfangsrichtung und/oder in Radialrichtung verstellbar ist.

11. Lagereinrichtung nach einem der vorstehenden Ansprüche, die ferner einen Aktor, insbesondere einen elektrisch, hydraulisch oder pneumatisch betriebenen Aktor, aufweist, der dazu eingerichtet ist, den Bevorratungsbereich der Lagereinrichtung (1) in eine Umfangsrichtung der Rotationsachse (5) zu drehen.

12. Lagereinrichtung nach Anspruch 11, die ferner derart eingerichtet ist, dass der Bevorratungsbereich bezüglich der Umfangsrichtung der Rotationsachse (5) reproduzierbar jede Position aus einer vorbestimmten Anzahl voneinander verschiedener Positionen einzunehmen kann, wobei die vorbestimmte Anzahl bevorzugt der Summe aus der Anzahl der ersten Anschlagmittel (15, 15a, 15b) und der zweiten Anschlagmittel entspricht.

13. Lagereinrichtung nach einem der vorstehenden Ansprüche, die ferner Mittel zum Messen und/oder Ausgeben einer Drehposition des Bevorratungsbereichs aufweist.

14. Lagersystem (100) mit:
einer oder mehreren Lagereinrichtungen (1) nach einem der vorstehenden Ansprüche;
einem Industrieroboter (10), insbesondere einem Industrieroboter mit einer Sechsachskinematik, wobei der Industrieroboter einen Robotergreifer aufweist, der dazu eingerichtet ist, ein Werkstück (7,7a,7b,7c,7'a,7'b,7'c) im Bereich einer Schmalseite desselben zu halten,
wobei das Lagersystem bevorzugt ferner zumindest eine Fördereinrichtung (20), insbesondere ein Förderband und/oder ein Rollenband, aufweist.

15. Lagersystem nach Anspruch 14, das ferner eine Steuereinheit aufweist, die dazu eingerichtet ist, eine Position bezüglich der Umfangsrichtung der Rotationsachse (5) des Bevorratungsbereichs der zumindest einen Lagereinrichtung (1) zu steuern, wobei die Steuereinheit insbesondere dazu eingerichtet ist, Positionen bezüglich der Umfangsrichtungen der Rotationsachsen (5) der Bevorratungsbereiche mehrerer Lagereinrichtungen (1) unabhängig voneinander zu steuern, wobei die Steuereinheit ferner dazu eingerichtet ist, eine Verfahrbewegung des Industrieroboters (10), und bevorzugt auch einen Parameter der Fördereinrichtung (20), insbesondere einen Betrieb und/oder eine Geschwindigkeit der Fördereinrichtung (20), zu steuern.

16. Verwendung einer Lagereinrichtung (1) nach einem der Ansprüche 1 bis 15 oder eines Lagersystems nach einem der Ansprüche 14 oder 15, bei der die Rotationsachse (5) im Wesentlichen parallel zur Gravitationsrichtung orientiert ist, und bei der die erste Anschlageinrichtung (3) bevorzugt in einem unteren Endabschnitt des Bevorratungsbereichs gebildet ist.

17. Verfahren zur Handhabung von Werkstücken, insbesondere von plattenförmigen Werkstücken (7, 7a, 7b, 7c), die bevorzugt zumindest abschnittsweise aus Holz, Holzhaltigem Werkstoff, Verbundwerkstoff, Kunststoff, Aluminium oder dergleichen bestehen, die jeweils eine Länge, eine Breite und eine Dicke aufweisen, wobei das Verfahren unter Verwendung einer Lagereinheit nach einem der Ansprüche 1 bis 13 und/oder eines Lagersystems nach einem der Ansprüche 14 oder 15 durchgeführt wird, und wobei das Verfahren zumindest die folgenden Schritte aufweist:
- Entnehmen eines Werkstücks, insbesondere eines plattenförmigen Werkstücks aus dem Bevorratungsbereich der Lagereinrichtung (1);
- Drehen des Bevorratungsbereichs der Lagereinrichtung (1) um die Rotationsachse (2).

18. Verfahren nach Anspruch 17, bei der vor dem Schritt des Entnehmens eine Mehrzahl an Werkstücken derart im Bevorratungsbereich der Lagereinrichtung angeordnet sind, dass die Breitenrichtungen oder die Längsrichtungen aller Werkstücke bezüglich der Rotationsachse (5) im Wesentlichen radial orientiert sind, und dass die jeweils anderen der Breiten- oder Längsrichtungen aller Werkstücke (7,7a,7b,7c) im Wesentlichen parallel zur Rotationsachse (5) orientiert sind.

19. Verfahren nach Anspruch 18, bei dem die plattenförmigen Werkstücke in Umfangsrichtung der Rotationsachse (5) derart alternierend angeordnet sind, dass jeweils zwei benachbarte Werkstücke in Radialrichtung der Rotationsachse (5) eine unterschiedliche Ausdehnung aufweisen.

20. Verfahren nach Anspruch 19, bei dem, vor dem Schritt des Entnehmens, bezüglich der Radialrichtung der Rotationsachse außenliegende Schmalseiten sämtlicher Werkstücke im Wesentlichen den gleichen Abstand zur Rotationsachse (5) aufweisen.

21. Verfahren nach einem der Ansprüche 17 bis 20, bei dem der Schritt des Entnehmens zumindest teilweise mit einem Industrieroboter (10), bevorzugt einem Industrieroboter mit einer Sechsachskinematik, durchgeführt wird, wobei der Industrieroboter einen Greifer aufweist, und wobei der Schritt des Entnehmens das Greifen des Werkstücks im Bereich einer in Radialrichtung der Rotationsachse (5) außenliegenden Schmalseite des Werkstücks beinhaltet.

22. Verfahren nach einem der Ansprüche 17 bis 21, ferner mit dem Schritt: Zuführen des entnommenen Werkstücks in eine Fördereinrichtung, insbesondere, auflegen des entnommenen Werkstücks auf ein Förderband.

23. Verfahren nach einem der Ansprüche 17 bis 22, ferner mit dem Schritt: Zuführen des entnommenen Werkstücks in eine Bearbeitungsmaschine, insbesondere, auflegen des Werkstücks auf einen Bearbeitungstisch einer Bearbeitungsmaschine.

24. Verfahren nach einem der Ansprüche 21 bis 23, bei dem eine Mehrzahl an Lagereinrichtungen (1) vorgesehen ist, die bevorzugt im Wesentlichen gleich beabstandet vom Industrieroboter (10) angeordnet sind, wobei während des Entnehmens eines Werkstücks aus einer ersten Lagereinrichtung der Mehrzahl an Lagereinrichtungen ein Bevorratungsbereich einer zweiten Lagereinrichtung der Mehrzahl an Lagereinrichtungen um eine Rotationsachse (5) der zweiten Lagereinrichtung gedreht wird.

## Claims

1. A storage apparatus (1) for stocking workpieces (7, 7a, 7b, 7c, 7'a, 7'b, 7'c), in particular plate-shaped workpieces, which preferably consist at least partially of wood, wood-containing material, composite material, plastic, aluminium or the like, and which each have a length, a width and a thickness,
wherein
the storage apparatus (1) has at least one stocking area which is configured to be rotatable at least sectionwise with respect to an axis of rotation (5),
the stocking area of the storage apparatus (1) is configured such to accommodate a plurality of workpieces (7, 7a, 7b, 7c, 7'a, 7'b, 7'c), in particular a plurality of plate-shaped workpieces, in such a manner that the width directions or the length directions of the workpieces (7, 7a, 7b, 7c, 7'a, 7'b, 7'c) are oriented substantially radially with respect to the axis of rotation (5), and that the respective other width or length directions of the workpieces (7, 7a, 7b, 7c, 7'a, 7'b, 7'c) are oriented substantially parallel to the axis of rotation (5), the storage apparatus (1) further:
has a first abutment apparatus (3) which is configured to prevent a movement of stocked workpieces (7, 7a, 7b, 7c, 7'a, 7'b, 7'c) in a direction parallel to the axis of rotation (5), and which has a plurality of first guide means (11, 11a, 11b),
which are arranged circumferentially with respect to the axis of rotation (5), wherein a gap is formed between each of two first guide means (11, 11a, 11b) which is suitable for radially inserting a workpiece (7, 7a, 7b, 7c) with respect to the axis of rotation (5) into the stocking area of the storage apparatus (1), and
**characterized in that** the storage apparatus (1) has a plurality of first abutment means (15, 15a, 15b) which are configured to prevent a movement of stocked workpieces (7'a, 7'b, 7'c) in a direction radial to the axis of rotation (5),
wherein the first abutment means (15, 15a, 15b) are arranged circumferentially with respect to the axis of rotation (5), and circumferentially spaced apart from each other,
wherein the distance between the first abutment means (15, 15a, 15b) and the axis of rotation (5) is greater than the distance between a first abutment apparatus (3) and the axis of rotation (5), and
wherein at least two adjacent, but preferably all, first abutment means (15, 15a, 15b) are arranged such to guide workpieces (7, 7a, 7b, 7c) which are pushed radially between the at least two adjacent first abutment means (15, 15a, 15b) with respect to the axis of rotation (5).

2. The storage apparatus (1) according to claim 1, wherein the first abutment apparatus (3) has a substantially flat surface, in particular a flat surface rotationally symmetrical with respect to the axis of rotation (5), which is particularly preferably substantially perpendicular to the axis of rotation (5).

3. The storage apparatus (1) according to claim 1 or 2, having a second abutment apparatus (9), configured to prevent a movement of stocked workpieces (7, 7a, 7b, 7c) in a direction radial to the axis of rotation (5), wherein the second abutment apparatus (9) preferably has a substantially cylindrical or conical surface, in particular a cylindrical or conical surface that is rotationally symmetrical with respect to the axis of rotation.

4. The storage apparatus (1) according to claim 3, wherein the second abutment apparatus has a plurality of second abutment means which are arranged circumferentially with respect to the axis of rotation (5).

5. The storage apparatus according to any one of the preceding claims, which further comprises a plurality of second guide means (13, 13a, 13b, 13c, 11, 11a, 17b) which are arranged circumferentially with respect to the axis of rotation (5), wherein a gap is formed between each of two second guide means (13, 13a, 13b, 13c, 17, 11a, 17b) which is suitable for radially inserting a workpiece (7, 7a, 7b, 7c) into the stocking area of the storage apparatus (1) with respect to the axis of rotation (5), and wherein the distance between the second guide means (13, 13a, 13b, 13c, 17, 11a, 17b) and the axis of rotation (5) is less than the distance between the first guide means (11, 11a, 11b) and the axis of rotation.

6. The storage apparatus according to any one of claims 3 to 5, wherein the second abutment apparatus (9), the first abutment means (15, 15a, 15b), the second abutment means, the first guide means (11, 11a, 11b) and/or the second guide means (13, 13a, 13b, 13c, 17, 11a, 17b) are formed exclusively in a first end section of the stocking area with respect to the axis of rotation (5), or extend substantially over the entire stocking area of the storage apparatus (1) with respect to the axial direction of the axis of rotation (5), wherein the first end section is preferably an end section in which the first abutment apparatus (3) is formed.

7. The storage apparatus according to any one of claims 2 to 6, wherein the first abutment apparatus (3), the second abutment apparatus, the first abutment means (15, 15a, 15b), the second abutment means, the first guide means (11, 11a, 11b), and/or the second guide means (13, 13a, 13b, 17, 11a, 17b) have a brush structure.

8. The storage apparatus (1) according to any one of the preceding claims, which is further configured such to fix workpieces (7, 7a, 7b, 7c, 7'a, 7'b, 7'c) received in the stocking area, in particular to fix temporarily, and preferably to fix selectively.

9. The storage apparatus (1) according to any one of claims 2 to 8, wherein the position of the first abutment apparatus (3) is adjustable at least sectionwise in a direction parallel to the axis of rotation (5).

10. The storage apparatus according to any one of claims 3 to 9, wherein the position of at least one first abutment means (15, 15a, 15b), at least one second abutment means, at least one first guide means (11, 11a, 11b) and/or at least one second guide means (13, 13a, 13b, 13c, 17, 11a, 17b) is adjustable with respect to the axis of rotation (5) in the circumferential direction and/or in the radial direction.

11. The storage apparatus according to any one of the preceding claims, which further has an actuator, in particular an electrically, hydraulically or pneumatically operated actuator, which is configured such to rotate the stocking area of the storage apparatus (1) in a circumferential direction of the axis of rotation (5).

12. The storage apparatus according to claim 11, which is arranged in such a manner that the stocking area with respect to the circumferential direction of the axis of rotation (5) can reproducibly assume any position from a predetermined number of different positions, wherein the predetermined number preferably corresponds to the sum of the number of the first abutment means (15, 15a, 15b) and the second abutment means.

13. The storage apparatus according to any one of the preceding claims, which further comprises means for measuring and/or outputting a rotational position of the stocking area.

14. A storage system (100) with:
one or more storage apparatuses (1) according to any one of the preceding claims;
an industrial robot (10), in particular an industrial robot with six-axis kinematics, wherein the industrial robot has a robot gripper, configured to hold a workpiece (7, 7a, 7b, 7c, 7'a, 7'b, 7'c) in the area of a narrow side thereof,
wherein the storage system preferably further comprises at least one conveying apparatus (20), in particular a conveyor belt and/or a roller belt.

15. The storage system according to claim 14, which further has a control unit, that is configured such to control a position with respect to the circumferential direction of the axis of rotation (5) of the stocking area of the at least one storage apparatus (1), wherein the control unit is in particular configured such to control positions with respect to the circumferential directions of the rotation axes (5) of the stocking areas of several storage apparatuses (1) independently of one another, wherein the control unit is further configured such to control a traversing movement of the industrial robot (10), and preferably also a parameter of the conveying apparatus (20), in particular an operation and/or a speed of the conveying apparatus (20).

16. A use of a storage apparatus (1) according to any one of claims 1 to 15 or a storage system according to any one of claims 14 or 15, wherein the axis of rotation (5) is oriented substantially parallel to the direction of gravity, and wherein the first abutment apparatus (3) is preferably formed in a lower end section of the stocking area.

17. A method for handling workpieces, in particular plate-shaped workpieces (7, 7a, 7b, 7c), which preferably consist at least partially of wood, wood-containing material, composite material, plastic, aluminium or the like, each having a length, a width and a thickness, wherein the method is carried out using a storage unit according to any one of claims 1 to 13 and/or a storage system according to any one of claims 14 or 15, and wherein the method has at least the following steps:
- removing a workpiece, in particular a plate-shaped workpiece, from the stocking area of the storage apparatus (1);
- rotating the stocking area of the storage apparatus (1) about the axis of rotation (2).

18. The method according to claim 17, in which, prior to the step of removing, a plurality of workpieces are arranged in the stocking area of the storage apparatus in such a manner that the width directions or the length directions of all workpieces with respect to the axis of rotation (5) are essentially radially oriented, and that the other width or length directions of all workpieces (7, 7a, 7b, 7c) are essentially parallel to the axis of rotation (5).

19. The method according to claim 18, in which the plate-shaped workpieces are arranged in such a manner alternately in the circumferential direction of the axis of rotation (5) that each pair of adjacent workpieces has a different extent in the radial direction of the axis of rotation (5).

20. The method according to claim 19, in which, prior to the step of removing, the outer narrow sides of all workpieces with respect to the radial direction of the axis of rotation have substantially the same distance to the axis of rotation (5).

21. The method according to any one of claims 17 to 20, in which the step of removing is carried out at least partially with an industrial robot (10), preferably an industrial robot with a six-axis kinematics, wherein the industrial robot has a gripper, and wherein the step of removing includes gripping the workpiece in the region of a narrow side of the workpiece, located outside in the radial direction of the axis of rotation (5).

22. The method according to any one of claims 17 to 21, further with the step: feeding the removed workpiece into a conveying apparatus, in particular, placing the removed workpiece onto a conveyor belt.

23. The method according to any one of claims 17 to 22, further with the step: feeding the removed workpiece into a processing machine, in particular, placing the workpiece on a processing table of a processing machine.

24. The method according to any one of claims 21 to 23, in which a plurality of storage apparatuses (1) are provided, which are preferably arranged at substantially equal intervals from the industrial robot (10), wherein, during removing a workpiece from a first storage apparatus of the plurality of storage apparatuses, a stocking area of a second storage apparatus of the plurality of storage apparatuses is rotated about an axis of rotation (5) of the second storage apparatus.

## Revendications

1. Dispositif de stockage (1) pour l'approvisionnement de pièces à usiner (7, 7a, 7b, 7c, 7'a, 7'b, 7'c), en particulier de pièces à usiner en forme de plaque, qui sont constituées de préférence au moins par sections de bois, de matériau contenant du bois, de matériau composite, de plastique, d'aluminium ou similaire, et qui présentent chacune une longueur, une largeur et une épaisseur,
dans lequel
le dispositif de stockage (1) présente au moins une zone d'approvisionnement qui est réalisée pour être rotative au moins par sections par rapport à un axe de rotation (5),
la zone d'approvisionnement du dispositif de stockage (1) est conçue pour accueillir une pluralité de pièces à usiner (7, 7a, 7b, 7c, 7'a, 7'b, 7'c), en particulier une pluralité de pièces à usiner en forme de plaques, de sorte que les directions de largeur ou les directions longitudinales des pièces à usiner (7, 7a, 7b, 7c, 7'a, 7'b, 7'c) sont sensiblement orientées radialement par rapport à l'axe de rotation (5), et que les autres directions de largeur ou longitudinales des pièces à usiner (7, 7a, 7b, 7c, 7'a, 7'b, 7'c) sont sensiblement orientées parallèlement à l'axe de rotation (5),
le dispositif de stockage (1) présente en outre :
un premier dispositif de butée (3) qui est conçu pour empêcher un mouvement de pièces à usiner (7, 7a, 7b, 7c, 7'a, 7'b, 7'c) approvisionnées dans une direction parallèle à l'axe de rotation (5), et une pluralité de premiers moyens de guidage (11, 11a, 11b),
qui sont disposés dans la direction circonférentielle par rapport à l'axe de rotation (5), dans lequel une fente, qui convient à l'insertion radiale par rapport à l'axe de rotation (5) d'une pièce à usiner (7, 7a, 7b, 7c) dans la zone d'approvisionnement du dispositif de stockage (1), est formée entre respectivement deux premiers moyens de guidage (11, 11a, 11b), et
**caractérisé en ce que** le dispositif de stockage (1) présente une pluralité de premiers moyens de butée (15, 15a, 15b), qui sont conçus pour empêcher un mouvement de pièces à usiner (7'a, 7'b, 7'c) approvisionnées dans une direction radiale par rapport à l'axe de rotation (5),
dans lequel les premiers moyens de butée (15, 15a, 15b) sont disposés dans la direction circonférentielle par rapport à l'axe de rotation (5), et à distance les uns des autres dans la direction circonférentielle,
dans lequel la distance entre les premiers moyens de butée (15, 15a, 15b) et l'axe de rotation (5) est supérieure à la distance entre un premier dispositif de butée (3) et l'axe de rotation (5), et
dans lequel au moins deux, mais de préférence tous les premiers moyens de butée (15, 15a, 15b) sont conçus pour guider les pièces à usiner (7, 7a, 7b, 7c) qui sont poussées entre les au moins deux premiers moyens de butée (15, 15a, 15b) adjacents par rapport à l'axe de rotation (5) dans la direction radiale.

2. Dispositif de stockage (1) selon la revendication 1, dans lequel le premier dispositif de butée (3) présente une surface sensiblement plane, en particulier une surface plane à symétrie de rotation par rapport à l'axe de rotation (5), qui est de manière particulièrement préférée sensiblement perpendiculaire à l'axe de rotation (5).

3. Dispositif de stockage (1) selon la revendication 1 ou la revendication 2, qui présente un second dispositif de butée (9) qui est conçu pour empêcher un mouvement de pièces à usiner (7, 7a, 7b, 7c) approvisionnées dans une direction radiale par rapport à l'axe de rotation (5), dans lequel le second dispositif de butée (9) présente de préférence une surface réalisée de manière sensiblement cylindrique ou conique, en particulier une surface symétrique en rotation par rapport à l'axe de rotation réalisée de manière cylindrique ou conique.

4. Dispositif de stockage (1) selon la revendication 3, pour lequel le second dispositif de butée présente une pluralité de seconds moyens de butée qui sont disposés dans la direction circonférentielle par rapport à l'axe de rotation (5).

5. Dispositif de stockage selon l'une quelconque des revendications précédentes qui présente en outre une pluralité de seconds moyens de guidage (13, 13a, 13b, 13c, 17, 17a, 17b) qui sont disposés dans la direction circonférentielle par rapport à l'axe de rotation (5), dans lequel une fente, qui convient à l'insertion radiale par rapport à l'axe de rotation (5) d'une pièce à usiner (7, 7a, 7b, 7c) dans la zone d'approvisionnement du dispositif de stockage (1), est formée entre respectivement deux seconds moyens de guidage (13, 13a, 13b, 13c, 17, 17a, 17b), et dans lequel la distance entre les seconds moyens de guidage (13, 13a, 13b, 13c, 17, 17a, 17b) et l'axe de rotation (5) est inférieure à la distance entre les premiers moyens de guidage (11, 11a, 11b) et l'axe de rotation.

6. Dispositif de stockage selon l'une quelconque des revendications 3 à 5, pour lequel le second dispositif de butée (9), les premiers moyens de butée (15, 15a, 15b), les seconds moyens de butée, les premiers moyens de guidage (11, 11a, 11b) et/ou les seconds moyens de guidage (13, 13a, 13b, 13c, 17, 17a, 17b) sont exclusivement formés dans une première section d'extrémité de la zone d'approvisionnement par rapport à l'axe de rotation (5), ou s'étendent par rapport à la direction axiale de l'axe de rotation (5) sensiblement sur l'ensemble de la zone d'approvisionnement du dispositif de stockage (1), dans lequel la première section d'extrémité est de préférence une section d'extrémité dans laquelle est formé le premier dispositif de butée (3).

7. Dispositif de stockage selon l'une quelconque des revendications 2 à 6, pour lequel le premier dispositif de butée (3), le second dispositif de butée, les premiers moyens de butée (15, 15a, 15b), les seconds moyens de butée, les premiers moyens de guidage (11, 11a, 11b), et/ou les seconds moyens de guidage (13, 13a, 13b, 17, 17a, 17b), présentent une structure de brosse.

8. Dispositif de stockage (1) selon l'une quelconque des revendications précédentes, qui est en outre conçu pour fixer, en particulier pour fixer temporairement, et de préférence pour fixer de manière sélective les pièces à usiner (7, 7a, 7b, 7c, 7'a, 7'b, 7'c) accueillies dans la zone d'approvisionnement.

9. Dispositif de stockage (1) selon l'une quelconque des revendications 2 à 8, pour lequel la position du premier dispositif de butée (3) est réglable au moins par sections dans une direction parallèle à l'axe de rotation (5).

10. Dispositif de stockage selon l'une quelconque des revendications 3 à 9, pour lequel la position d'au moins un premier moyen de butée (15, 15a, 15b), d'au moins un second moyen de butée, d'au moins un premier moyen de guidage (11, 11a, 11b) et/ou d'au moins un second moyen de guidage (13, 13a, 13b, 13c, 17, 17a, 17b) par rapport à l'axe de rotation (5) est réglable dans la direction circonférentielle et/ou dans la direction radiale.

11. Dispositif de stockage selon l'une quelconque des revendications précédentes, qui présente en outre un actionneur, en particulier un actionneur à commande électrique, hydraulique ou pneumatique, qui est conçu pour faire tourner la zone d'approvisionnement du dispositif de stockage (1) dans une direction circonférentielle par rapport à l'axe de rotation (5).

12. Dispositif de stockage selon la revendication 11, qui est en outre conçu de sorte que la zone d'approvisionnement puisse prendre de manière reproductible, par rapport à la direction circonférentielle de l'axe de rotation (5), chaque position à partir d'un nombre prédéterminé de positions différentes les unes des autres, dans lequel le nombre prédéterminé correspond à la somme du nombre des premiers moyens de butée (15, 15a, 15b) et des seconds moyens de butée.

13. Dispositif de stockage selon l'une quelconque des revendications précédentes, qui présente en outre des moyens de mesure et/ou de sortie d'une position de rotation de la zone d'approvisionnement.

14. Système de stockage (100) avec :
un ou plusieurs dispositifs de stockage (1) selon l'une quelconque des revendications précédentes ;
un robot industriel (10), en particulier un robot industriel avec une cinématique à six axes, dans lequel le robot industriel présente un préhenseur de robot qui est conçu pour maintenir une pièce à usiner (7, 7a, 7b, 7c, 7'a, 7'b, 7'c) dans la zone d'un petit côté de celle-ci,
dans lequel le système de stockage présente de préférence en outre au moins un dispositif de transport (20), en particulier une bande transporteuse et/ou une bande à rouleaux.

15. Système de stockage selon la revendication 14, qui présente en outre une unité de commande qui est conçue pour commander une position par rapport à la direction circonférentielle de l'axe de rotation (5) de la zone d'approvisionnement de l'au moins un dispositif de stockage (1), dans lequel l'unité de commande est en particulier conçue pour commander des positions par rapport aux directions circonférentielles des axes de rotation (5) des zones d'approvisionnement de plusieurs dispositifs de stockage (1) indépendamment les uns des autres, dans lequel l'unité de commande est en outre conçue pour commander un mouvement de déplacement du robot industriel (10), et de préférence également un paramètre du dispositif de transport (20), en particulier un fonctionnement et/ou une vitesse du dispositif de transport (20).

16. Utilisation d'un dispositif de stockage (1) selon l'une quelconque des revendications 1 à 15 ou d'un système de stockage selon l'une quelconque des revendications 14 ou 15, pour laquelle l'axe de rotation (5) est sensiblement orienté parallèlement à la direction de la gravité, et pour laquelle le premier dispositif de butée (3) est de préférence formé dans une section d'extrémité inférieure de la zone d'approvisionnement.

17. Procédé de manipulation de pièces à usiner, en particulier de pièces à usiner (7, 7a, 7b, 7c) en forme de plaque, qui sont constituées de préférence au moins par sections de bois, de matériau contenant du bois, de matériau composite, de plastique, d'aluminium ou similaire, qui présentent chacune une longueur, une largeur et une épaisseur, dans lequel le procédé est mis en œuvre en utilisant une unité de stockage selon l'une quelconque des revendications 1 à 13 et/ou un système de stockage selon l'une quelconque des revendications 14 ou 15, et dans lequel le procédé présente au moins les étapes suivantes :
- le prélèvement d'une pièce à usiner, en particulier d'une pièce à usiner en forme de plaque, de la zone d'approvisionnement du dispositif de stockage (1) ;
- la rotation de la zone d'approvisionnement du dispositif de stockage (1) autour de l'axe de rotation (2).

18. Procédé selon la revendication 17, selon lequel, avant l'étape de prélèvement, une pluralité de pièces à usiner sont disposées dans la zone d'approvisionnement du dispositif de stockage de sorte que les directions de largeur ou les directions longitudinales de toutes les pièces à usiner sont sensiblement orientées radialement par rapport à l'axe de rotation (5), et que les autres directions de largeur ou longitudinales de toutes les pièces à usiner (7, 7a, 7b, 7c) sont sensiblement orientées parallèlement à l'axe de rotation (5).

19. Procédé selon la revendication 18, selon lequel les pièces à usiner en forme de plaque sont disposées en alternance dans la direction circonférentielle de l'axe de rotation (5), de sorte que deux pièces à usiner adjacentes présentent chacune une étendue différente dans la direction radiale de l'axe de rotation (5).

20. Procédé selon la revendication 19, selon lequel, avant l'étape de prélèvement, les petits côtés situés à l'extérieur par rapport à la direction radiale de l'axe de rotation de toutes les pièces à usiner présentent sensiblement la même distance par rapport à l'axe de rotation (5).

21. Procédé selon l'une quelconque des revendications 17 à 20, selon lequel l'étape de prélèvement est mise en œuvre au moins partiellement avec un robot industriel (10), de préférence un robot industriel avec une cinématique à six axes, dans lequel le robot industriel présente un préhenseur, et dans lequel l'étape de prélèvement comporte la saisie de la pièce à usiner dans la zone d'un petit côté de la pièce à usiner situé à l'extérieur dans la direction radiale de l'axe de rotation (5).

22. Procédé selon l'une quelconque des revendications 17 à 21, en outre avec l'étape : d'amenée de la pièce à usiner prélevée dans un dispositif de transport, en particulier de dépose de la pièce à usiner prélevée sur une bande transporteuse.

23. Procédé selon l'une quelconque des revendications 17 à 22, en outre avec l'étape : d'amenée de la pièce à usiner prélevée dans une machine d'usinage, en particulier de dépose de la pièce à usiner sur une table d'usinage d'une machine d'usinage.

24. Procédé selon l'une quelconque des revendications 21 à 23, selon lequel une pluralité de dispositifs de stockage (1) est prévue, qui sont disposés de préférence sensiblement à égale distance du robot industriel (10), dans lequel, pendant le prélèvement d'une pièce à usiner d'un premier dispositif de stockage de la pluralité de dispositifs de stockage, une zone d'approvisionnement d'un second dispositif de stockage de la pluralité de dispositifs de stockage est amenée en rotation autour d'un axe de rotation (5) du second dispositif de stockage.
